# EUROPEAN PATENT SPECIFICATION

(11) **EP 3 775 630 B1**
(45) Date of publication and mention of the grant of the patent: **18.12.2024**
(21) Application number: 19712588.3
(22) Date of filing: 25.03.2019
(51) Int. Cl.: F16J 9/14, F16J 9/20

(54) **A PISTON RING**
KOLBENRING
SEGMENT DE PISTON

(30) Priority: 28.03.2018 EP 18164649
(43) Date of publication of application: 17.02.2021
(73) Proprietor: Federal-Mogul Göteborg AB, 435 23 Mölnlycke (SE)
(72) Inventor: QVIST, Hans, Gunnar, 412 75 Göteborg (SE)
(74) Representative: AWA Sweden AB
(86) International application number: PCT/EP2019/057436
(87) International publication number: WO 2019/185546

(56) References cited:
- EP-A1- 2 206 909
- GB-A- 2 164 418
- GB-A- 2 256 466

## Description

### Technical Field

The present invention relates to a piston ring, in particular a piston ring of the kind that is intended for use in large engines.

### Background Art

A piston ring may be formed by a main section having two ends which are connected to each other via mutually engaging tongue sections in an overlapping region to form a closed ring. The piston ring is normally mounted in a ring groove on an outer peripheral part of a piston. The piston ring is elastic, and is intended to be in sliding contact with an inner surface of a cylinder. The piston ring, together with the piston and the cylinder may define a combustion chamber of an engine.

Piston rings of the kind which are preferably used in large diesel engines, for instance in ship engines, are exposed to extreme conditions during the operation of the engine. A high degree of wear, heat and corrosive attack cause the piston ring to quickly wear, thus necessitating replacement. Many methods for increasing the service life of the piston rings have been proposed. Some of these methods are directed to the application of an abrasion-resistant layer or coating to the most exposed portions of the piston ring, preferably its outer periphery.

The piston rings may have a tapered outer surface (tapered running profile) and the wear coating being provided on the tapered surface. A deep running profile allows the high pressure in the combustion chamber to act on the outer periphery of the piston ring. A long taper (seen in the axial direction) will, better than a short taper, cancel a large portion of the high pressure acting on the inner periphery of the piston ring. This in turn enables the running profile depth to last during the life of the wear coating. Although a long taper is beneficial from a pressure relief perspective, a disadvantage is that such a profile of the piston ring comes with the risk of leakage at the overlapping region.

Another prior art piston ring is known from GB 2 256 466 A, which discloses the preamble of claim 1.

### Summary of the Invention

An object of the present invention is to mitigate the drawbacks of known piston rings. This and other objects, which will become apparent in the following, are accomplished by a piston ring defined in the accompanying independent claim. Some of various exemplary embodiments are defined in the dependent claims.

The present invention is based on the insight that by varying the outer peripheral piston ring profile two functional requirements may be attained, namely an adequate pressure relief (at least partly cancelling the high pressure acting on the inner peripheral surface) without compromising the sealing effect at the overlapping region. In particular, the inventor has realized that by having a relatively long axial taper along most of the circumference, but a shorter taper adjacent to and at the overlapping region the risk of leakage at the overlapping region is reduced while the pressure cancelling function is maintained. In its most general sense, the present invention relates to a piston ring having an outer surface provided with a tapered surface portion, the tapering extending radially inwardly from a taper start, wherein the taper start varies (seen in the axial direction) in the vicinity of the overlapping region.

According to a first aspect of the present invention, a piston ring is provided. The piston ring comprises:
a main section extending along a circumferential direction around a geometrical axis,
a first tongue section extending from a first end of the main section towards a second end of the main section,
a second tongue section extending from the second end of the main section towards the first end of the main section,
a proximal flank,
a distal flank, and
an outer peripheral surface interconnecting said flanks,
wherein, in use, the first tongue section is configured to overlap the second tongue section to form a contacting interface,
   wherein, at the main section, said outer peripheral suface comprises a tapering first surface portion extending in the circumferential direction, wherein said first surface portion has a taper start from which said first surface portion tapers proximally and radially inwardly,
   wherein, adjacent to said first tongue section and said second tongue section, said taper start of said first surface portion is located proximally relative to the location of said taper start at the rest of the main section.

The terms "proximal" and "distal" are used in this disclosure as two opposite axial direction. For instance, if the proximal direction is upwards, then the distal direction would be downwards. Normally, the piston ring would be mounted on a piston so that the proximal flank faces towards the combustion chamber, while the distal flank faces away from the combustion chamber.

From the above, it should be understood that because the taper start adjacent to said tongue sections is located proximally of the taper start at the rest of the main section, the tapering first surface portion is locally (adjecent the tongue sections) shorter than for the rest of the main section. The shorter tapring reduces the risk of leakage, while the longer taper at the rest of the main section provides for adequate pressure cancellation between the inner and outer periphery of the piston ring.

A shorter taper may be present also at the overlapping region, in particular on the first tongue section. However, in some embodiments the outer peripheral surface at the overlapping region, including the first tongue section, may be non-tapered (i.e. substantially parallel with the axis, and with the cylinder against which the piston ring will slide).

It should be understood that the expression "adjacent to" is not intended to be limited to immediately bordering to the tongue sections. Rather, it should be understood as including in the vicinity of the tongue sections. Thus, put differently, the circumferential part of the tapering first surface portion located closest to first tongue section, and the circumferential part located closest to the secont tounge section, have a taper start which is proximal of the taper start of the rest of the tapering first surface portion.

Suitably, the difference in the location of the taper start of the tapering first surface portion may be achieved by a gradual proximal rising of the taper start towards the first and second tongue sections. The transition length from the taper start in the tapering first surface portion to the taper start in the overlapping region may suitably be no longer than 5% of the circumference for a closed ring.

Still according to the first aspect of the present invention, said outer peripheral surface (19) has a double taper profile, comprising a non-tapering second surface portion (22) and a tapering third surface portion (23), wherein said first (21), second (22) and third (23) surface portions are running surfaces. These surfaces preferably are located at the outer peripheral surface of said ring. Said surface portions (23), (22) and (21) will thus normally be in contact with the cylinder liner during operation in the engine, and accordingly the tapered surfaces are running surfaces and are located at the outer peripheral surface of the ring.

According to at least one example embodiment, the tapering first surface portion covers at least 75% of the circumference for a closed ring. Suitably, the zone covered by the tapering first surface portion is symmetrical with reference to a point located 180° (in the circumferential direction) from the overlapping region.

According to at least one example embodiment, the most proximal part of the contacting interface between the first tongue section and the second tongue section lies in a geometrical plane which is substantially perpendicular to said axis. In some embodiments the most proximal part may be along a flat contacting interface portion between the first tongue section and the second tongue section. In such cases, the flat contacting interface portion will coincide with said geometrical plane. In other embodiments the most proximal part may be the end of a curved contacting interface (such as a forming cross-section of a quarter of a circle).

According to some example embodiments, on the first tongue section, said outer peripheral surface extends proximally of said geometrical plane, and on the second tongue section, said outer peripheral surface extends distally of said geometrical plane. In some example embodiments, the first tongue section may extend both proximally and distally of said geometrical plane, enclosing the second tongue section both proximally and distally at the overlapping region.

According to at least one example embodiment, along most of the circumference of the piston ring, said taper start of the tapering first surface portion is located distally of said geometrical plane and the tapering extending proximally beyond said geomtrical plane.

According to at least one example embodiment, on the first tongue section, said outer peripheral surface comprises a non-tapering second surface portion extending from said geometrical plane. The non-tapering second surface portion may extend proximally from said geometrical plane all or part of the way to the proximal flank of the piston ring.

In embodiments in which the non-tapering second surface portion only extends part of the axial distance between the geometrical plane and the proximal flank, it may suitably transit into a tapering third surface portion. This is reflected in at least one example embodiment, according to which, on the first tongue section, the outer peripheral surface further comprises a tapering third surface portion which tapers radially inwardly, the tapering starting from the proximal end of the non-tapering second surface portion and extending proximally. The tapering third surface portion may suitably extend to the proximal flank.

According to at least one example embodiment, the taper angle of the tapering third surface portion is different than the taper angle of the tapering first surface portion. For instance, according to a least one example embodiment, the taper angle of the tapering third surface portion is greater than the taper angle of the tapering first surface portion. An advantage of having a relatively larger taper angle at the tapering third surface portion, which may normally have a shorter axial extension than the tapering first surface portion, is that the larger taper angle at least partly compensates for the loss in pressure cancellation capability possibly resulting form the shorter axial extension. However, in some example embodiments the taper angle may be substantially the same in the first and third surface portions.

According to at least one example embodiment, the taper angles of the tapering first and/or third surface portion may be constant. However, in other embodiments at least one of the first and third surface portions may have a taper angle that varies along the axial extension of the surface portion.

According to at least one example embodiment, each one of the tapering first surface portion and the tapering third surface portion extends to said proximal flank, and wherein the tapering third surface portion extends in the circumerential direction from the the first tongue section, into the main section, to the tapering first surface portion. Thus, the tapering third surface portion extends in both circumferential directions from the first end of the main section; in one direction it extends along the first tongue section, while in the other direction it extends along the main section and borders to the tapering first surface portion.

From the above it should be understood the at least in some example embodiments the outer peripheral surface of the piston ring provides for adequate pressure cancellation by having an axially long taper with a relatively small taper angle along most of the circumference of the piston ring, but locally (adjacent to the overlapping region and at the overlapping region) the long taper is substituted by an axially shorter taper which is compensated by a relatively large taper angle. Furthermore, the shorter taper reduces the risk of uncontrolled gas leakage past the piston ring.

Similarly to the first tongue section, the second tongue section and/or the area adjacent to the second tongue section may also be provided with a short axial taper having a relatively large taper angle. For instance, according to at least one example embodiment, adjacent to said second tongue section, said outer peripheral surface of the main section comprises a tapering fourth surface portion, having the same taper angle as the third surface portion.

According to at least one example embodiment, on the second tongue section, said outer peripheral surface extends non-tapered from said geometrical plane. Suitably, on the second tongue section the non-tapered peripheral surface extends distally to the distal flank.

According to at least one example embodiment, at the main section, said outer peripheral suface comprises a barrel-shaped surface portion which bulges outward in the radial direction and which extends in the circumferential direction and is located distally of said tapering first surface portion. The barrel-shaped surface portion may suitably have an axial extension such that the outward bulging is located at approximately the centre of the axial extension of the outer peripheral surface. In such case, the taper start of the the tapering first surface portion is located proximally of the outward bulging. Furthermore, to provide for reduced risk of leakage and adequate pressure cancellation, on the first tongue section the tapering first surface portion may be located above even more proximally. On the first tongue section, the barrel-shaped surface portion may be located between the tapering first surface portion and the contacting interface with the second tongue section.

The secon tongue section may suitably be void of the tapering first surface portion and only present the barrel-shaped surface portion.

Although various engagement possibilities are conceivable between the first and second tongue secitons, according to at least one example embodiment, the first tongue section may have an engagement groove formed to extend along the circumferential direction on an outer side of the main section with respect to the radial direction and distal side with respect to an axis direction, and wherein the second tongue section is configured to engage with said engagement groove.

It should be understood that, although the present invention has the advantage of reducing the risk of uncontrolled leakage past the overlapping region, it would be possible to combine the present invention with means for achieving a controlled leakage circumferentially outside the overlapping region, i.e. on or in the main section. The theory of having controlled leakage is to distribute the mechanical load within the ring pack. Therefore, in some embodiments, if desired, one or more flow paths may be provided in or on the outside of the main section to achieve a gas mass flow from the high pressure side to the low pressure side.

### Brief description of the drawings

Fig. 1 is a perspective view of a piston ring according to at least one example embodiment of the present invention, illustrating the piston ring in a non-mounted state.
Fig. 2 is a detailed perspective view of the piston ring of Fig. 1, after it has been mounted to a piston (not shown).
Fig. 3 is a cross sectional view taken along line A-A in Fig. 2.
Fig. 4 is a cross sectional view taken along line B-B in Fig. 2.
Fig. 5 is a cross sectional view taken along line C-C in Fig. 2.
Fig. 6 is a cross sectional view of a piston ring according to at least another example embodiment of the present invention, taken at an overlapping region similar to the embodiment shown in Fig. 4.

### Detailed description of the drawings

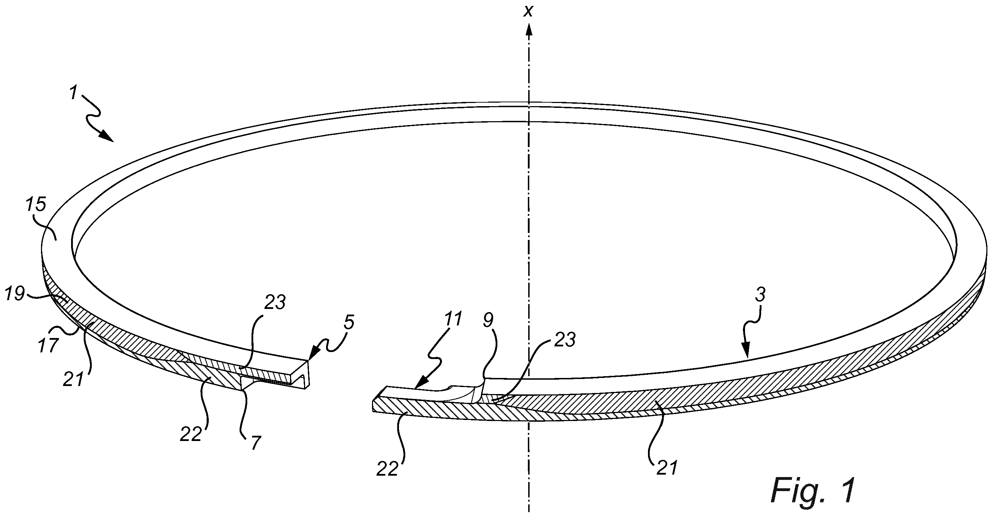

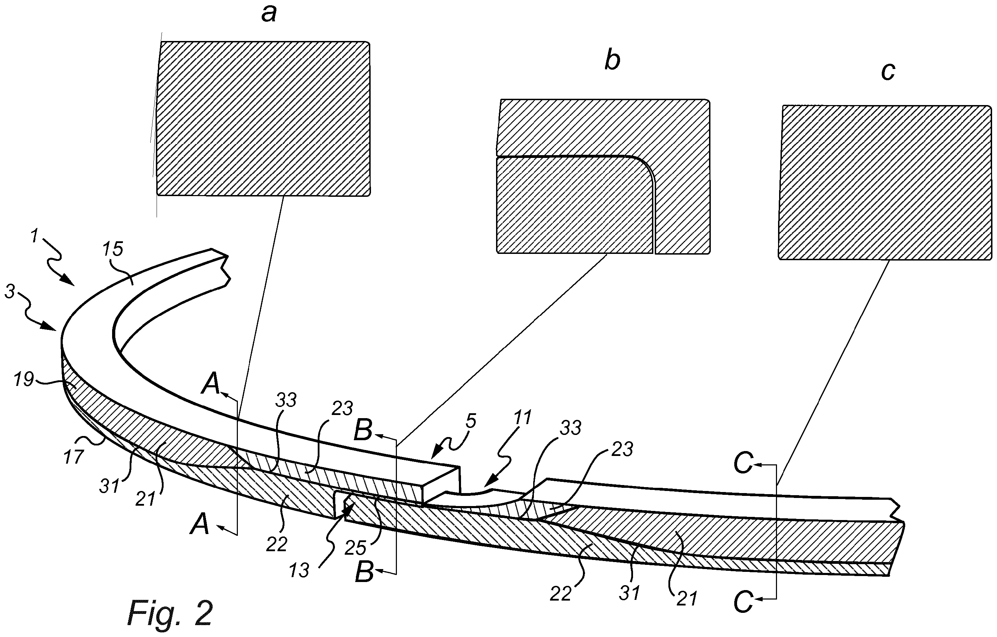

As can be seen in Fig. 1 and Fig. 2 the outer peripheral surfaces have been illustrated with hatched areas. Although hatched areas are normally used to illustrate a cross section, the hatched areas on the outer peripheral surface in Fig. 1 and Fig. 2 have been drawn for visually distinguishing different tapers along the piston ring and thereby facilitating the understanding of the following description.

Fig. 1 is a perspective view of a piston ring 1 according to at least one example embodiment of the present invention, illustrating the piston ring 1 in a non-mounted state. The piston ring 1 has a main section 3 extending along a circumferential direction around a geometrical central axis X. The piston ring 1 has a first tongue section 5 extending from a first end 7 of the main section 3 towards a second end 9 of the main section 3, and a second tongue section 11 extending from the second end 9 of the main section 3 towards the first end 7 of the main section 3.

The cross-section of the main section 3 is substantially unaltered along the circumference of the piston ring 1, and has a shape c illustrated in Fig. 2. However, adjacent to the two tongue sections 5, 11, the cross-section of the main section 3 is changed, and so is the cross-section at the overlapping region 13 formed by the tongue sections 5, 11 in the engaged state shown in Fig. 2.

As illustrated in Figs. 1 and 2, the piston ring 1 has a proximal flank 15, in the drawings illustrated as the upwardly facing flank, and a distal flank 17. In the illustrated example embodiment, the proximal flank 15 extends in the circumferential direction along the entire main section 3 and the first tongue section 5, while the distal flank 17 extends along the entire main section 3 and the second tongue section 11. It should be understood that other, example embodiments are conceivable, for instance in which the proximal and distal flanks extend from the main section to both tongue sections. Furthermore, although the proximal and distal flanks 15, 17 have been illustrated as being substantially flat surfaces extending perpendicularly to the axis X, it should be understood that other flank profiles are conceivable. For instance, the inner and outer periphery (in the radial direction) of the flanks 15, 17 may be defined by rounded edges which transit into inner and outer peripheral surfaces of the piston ring, which inner and outer peripheral surfaces extend parallel to the axis X.

In Fig. 1 an outer peripheral surface is illustrated with differently hatched areas. The outer peripheral surface 19 interconnects the proximal flank 15 and the distal flank 17. The different hatched areas, which will be discussed more in detail below, represent a non-tapered surface 22, a tapered surface 21 having a small taper angle and a tapered surface 23 having a relatively larger taper angle.

According to the illustrated example embodiment, the tapered surface 21 having a small taper angle extends circumferentially along almost the entire main section 3, and has a relatively large axial extension, while the tapered surface 23 having a relatively larger taper angle is only present at the main section 3 adjacent to the tongue sections 5, 11 and at one or both tongue sections 5, 11, and has only a relatively short axial extension. It should be noted, however, that in other embodiments, the tapered surface 23 having a relatively larger taper angle may be omitted on one or both tongue sections 5, 11, and may even be omitted on the main section 3. For instance, the tongue sections 5, 11 may instead present a non-tapered outer surface like surface 22.

As can be seen in Fig. 2, when the piston ring 1 is mounted to a piston, the first and second tongue sections 5, 11 are brought into engagement with each other. In the engaged state, the first tongue section 5 overlaps the second tongue section 1 to form a contacting interface 25. This circumferential part of the piston ring 1 having this contacting interface 25 may also be referred to as the overlapping region 13. In the illustrated exemplary embodiment there are two different contact surfaces between the first and section tongue sections 5, 11, namely a contact surface being substantially parallel with the axis X and a contact surface being substantially perpendicular to the axis X.

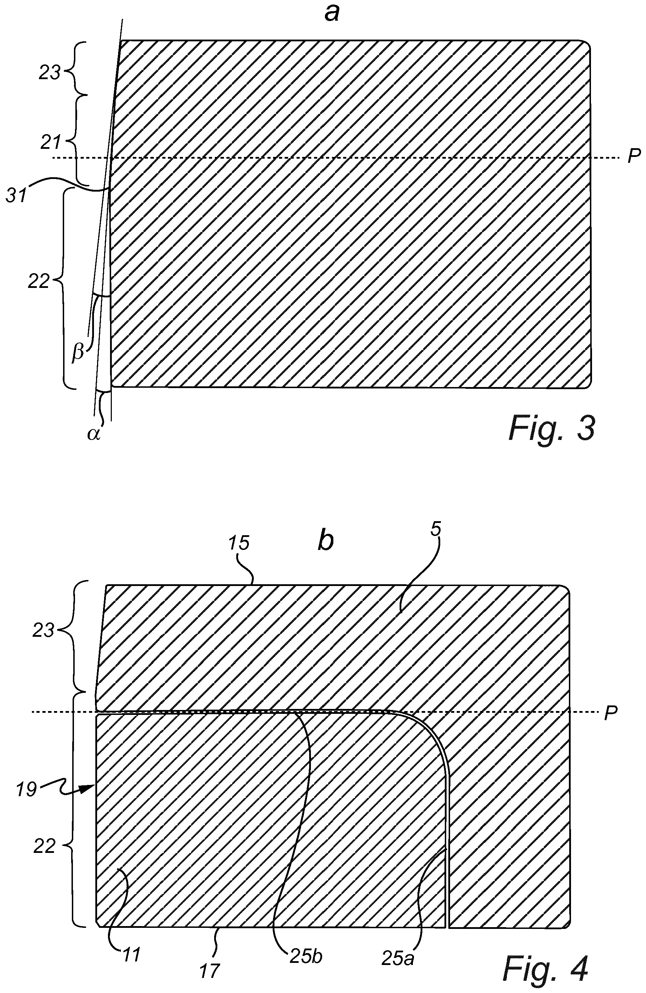

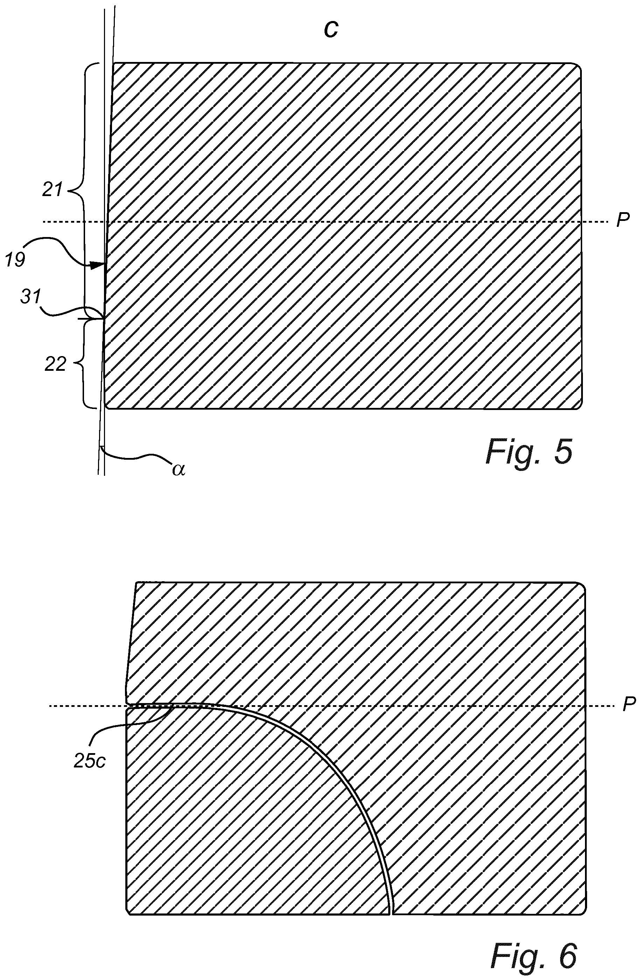

At the main section 3, said outer peripheral 19 suface comprises a tapering first surface portion 21 (above referred to as a tapered surface 21 having a small taper). The tapering first surface portion 21 has a taper start 31 from which said first surface portion tapers proximally and radially inwardly. The taper angle of the tapering first surface portion 21 is denoted α in Fig. 3 and Fig. 5.

Adjacent to the first and second tongue sections 5, 11 the taper start 31 rises in the proximal direction so that locally, near the overlapping region the taper start 31 is is located proximally relative to the location of said taper start 31 at the rest of the main section 3. This can be seen when in Fig. 3 where the taper start 31 is located proximally of the taper start 31 in Fig. 5. A non-tapering second surface portion 22 (above referred to as a non-tapered surface 22) extends distally from said taper start 31 of the tapering first surface portion 21. Thus, along most of the circumference of the main section 3 the tapering first surface portion 21 and the non-tapering second surface portion 22 run in paralell and neighbouring relationship.

As can be seen from Figs. 1 and 2, in this embodiment, the non-tapering second surface portion 22 extends into the tounge sections 5, 11. However, the tapering first surface portion 21 does not extend into the tongue sections 5, 11. Instead, as can be seen in Fig. 2, the taper start 31 of the tapering first surface portion 21 transits into a taper start 33 of another tapering third surface portion 23 (above referred to as a tapered surface 23 having a relatively larger taper angle). In the illustrated embodiment of Fig. 1, the tapering third surface portion 23 is present at both ends 7, 9 of the main section 3 but (in contrast to the tapering first surface portion 21 and non-tapering the second surface portion 22) the third surface portion does not extend uninterruptedly. In the circumferential direction, the tapering third surface portion 23 at the first end 7 of the main section 3 is separated from the tapering third surface portion 23 at the second end 9 of the main section 3 by the tapering first surface portion 21. Therefore, the tapering third surface portion 23 at the second end 9 of the main section 3 may, alternatively, be referred to as a tapering fourth surface portion, which may have the same (or different) taper angle as the tapering third surface portion 23 at the first end 7 of the main section 3. Seen from a centre point of the overlapping region 13, the tapering third surface portion 23 may suitably extend equal distance in both circumferential directions.

Adjacent to the tongue sections 5, 11, and also at the tongue sections 5, 11, the non-tapering second surface portion 22 extends distally from said taper start 33 of the tapering third surface portion 23. Thus, at the overlapping region 13 and adjacent to the overlapping region 13 the tapering third surface portion 23 and the non-tapering second surface portion 22 run in paralell and neighbouring relationship.

Fig. 2 illustrates three different cross-sectional shapes a, b and c along the circumference of the piston ring 1, the cross-sections being taken at lines A-A, B-B and C-C respectively. Shape a is also shown enlarged in Fig. 3, shape b in Fig. 4, and shape c in Fig. 5.

Starting with the overlapping region 13, represented by shape b, and in particular with reference to Fig. 4, the first tongue section 5 and the second tongue section 11 has a contacting interface 25, a portion 25a of which extends in parallel with the axis X and another portion 25b that extends perpendicular to the axis X. The latter one also defining the most proximal contact point(s) between the first and second tongue sections 5, 11. This latter portion of the contacting interface can thus be regarded as lying in a geometrical plane P which is perpendicular to the axis X. As can be seen in Fig. 4, the non-tapering second surface portion 22 extends along the second tongue section 11 across the interface portion 25a (i.e. across the geometrical plane P) and slightly into the first tongue section 5, where it transits into the tapering third surface portion 23. However, it should be noted that in other embodiments, the tapering third surface portion 23 may be omitted so that the non-tapering second surface portion 22 extends substantially all the way to the proximal flank 15.

Turning now to the cross-sectional shape c, representing the cross-section of most of the circumferential extension of the piston ring 1, and with particular reference to Fig. 5, it can be seen that the taper start 31 of the tapering first surface portion 21 starts distally of the geometrical plane P, at the distal half of the outer peripheral surface 19, and extends proximally beyond the geometrical plane P. In at least some example embodiments, the axial length of the tapering first surface portion 21 may be at least double the axial length of the non-tapering second surface portion 22.

Cross-sectional shape a, and in particular with reference to Fig. 3, represents a cross-section of the main section 3 adjacent to the first tongue section 5, at a location where the taper start 31 of the first tapering surface portion 21 is gradually rising in the proximal direction in its approach towards the first tongue section 5. At this circumferential location of the outer peripheral surface 19, the taper start 31 of the tapering first surface portion 21 is still distally of the geometrical plane P, and extending proximally beyond the geometrical plane P. However, its axial length is shorter than in Fig. 5, while the distally neighbouring non-tapering second surface portion 22 is longer. The tapering first surface portion 21 has the taper angle α, and the proximally neighbouring tapering third surface portion 23 has a taper angle β, which is also the angle of the tapering third surface portion 23 in Fig. 4. The taper angle β is larger than taper angle α. For instance, taper angle α may be in the range of 1° - 3° while taper angle β may suitably be 0° to 3° larger than α. In the herein mentioned embodiments in which the outer peripheral surface has a tapered surface portion combined with a barrel-shaped surface portion (and other embodiments having such combination of surface portions), the taper angle of the tapered surface portion may suitably be in the range of 1° - 6°.

An advantage of having a larger taper angle β is that it compensates for the shorter axial extension of the taper, from a pressure relief perspective.

It should be understood that although a varying taper start (wherein said tapering first surface portion 21 adjacent to the tongue sections 5, 11 has a taper start 31 which is located proximally relative to the location of said taper start at the rest of the main section 3) in itself mitigates the drawbacks of the prior art, the embodiment illustrated in Figs. 1 and 2 is particularly advantagous. As can be seen in Fig. 2 at the overlapping region 13, the peripheral outer surface 19 is flat-to-flat. In other words, from either side of the geometrical plane P (in this case the horizontal contacting interface 25) the outer peripheral surface 19, at least intially, extends in a non-tapering manner. On the first tongue section 5, the axial extension of the non-tapering surface 22 is short (and borders proximally to the tapering third surface portion 23), but is still enough for efficiently reducing the risk of leakage at the overlapping region.

As shown in the illustrated example embodiments, the most proximal part of the contacting interface 25 between the first tongue section 5 and the second tongue section 11 lies in said geometrical plane P which is substantially perpendicular to said axis X. This is true both for the embodiment shown with respect to Fig. 4 have two interface portions 25a, 25b substantially perpendicular to each other, and for the embodiment shown in Fig. 6, in which the contacting interface 25c defines a quarter of a circle. In either embodiment, at the first tongue section 5, the non-tapered second surface portion 22 extends proximally of said geometrical plane P, and at the second tongue section 11, the non-tapered second surface portion 22 extends distally of said geometrical plane P. Additionally, it is noted that in the Fig. 4 embodiment, the interface portion 25b, which is perpendicular to the axis X, coincides with the geometrical plane P.

Although the illustrated embodiments have shown a double-tapered outer peripheral surface 19, other embodiments are conceivable. For instance, according to one example embodiment the outer peripheral surface may comprise a barrel-shaped surface portion which bulges outward in the radial direction. The barral-shaped surface portion may extend in the circumferential direction and be located distally of said tapering first surface portion 21. Thus, the non-tapered second surface portion 22 may be replaced by a barral-shaped surface portion, suitably having a larger axial extension along most of the main section 3 compared to the axial extension of the non-tapered second surface portion 22 so that the circumferentially extending outward bulge which will contact the enclosing cylinder, is located approximately at the centre of the outer peripheral surface 19. In such case, the tapering first surface portion 21 would have taper start 31 located proximally of the outward bulge and consequently proximally compared to the taper start 31 illustrated in Figs. 1 and 2 (along most of the circumference of the main section 3).

Furthermore, it should be understood that even though the first tongue section 5 has been illustrated as an engagement groove formed to extend along the circumferential direction on an outer side of the main section 3 with respect to the radial direction and distal side with respect to the axis direction, so that the second tongue section 11 can engage with said engagement groove, other configurations are also conceivable. For instance, the first tongue section 5 may have an engagement groove which is open radially outwardly and towards the second end 9 of the main section 3, similarly to the illustrated embodiments, but which is closed distally such that the first tongue section extends both proximally and distally of the second tongue section.

The invention is limited only by the scope of the appended claims.

## Claims

1. A piston ring (1), comprising
a main section (3) extending along a circumferential direction around a geometrical axis (X),
a first tongue section (5) extending from a first end (7) of the main section (3) towards a second end (9) of the main section (3),
a second tongue section (11) extending from the second end (9) of the main section (3) towards the first end (7) of the main section (3),
a proximal flank (15),
a distal flank (17), and
an outer peripheral surface (19) interconnecting said flanks (15, 17),
wherein, in use, the first tongue section (5) is configured to overlap the second tongue section (11) to form a contacting interface (25, 25a, 25b, 25c),
wherein, at the main section (3), said outer peripheral surface (19) comprises a tapering first surface portion (21) extending in the circumferential direction, wherein said tapering first surface portion (21) has a taper start (31) from which said tapering first surface portion (21) tapers proximally and radially inwardly,
wherein, adjacent to said first tongue section (5) and said second tongue section (11), said taper start (31) of said first surface portion (21) is located proximally relative to the location of said taper start (31) at the rest of the main section (3),
**characterised in that**
said outer peripheral surface (19) has a double taper profile, comprising a non-tapering second surface portion (22) and a tapering third surface portion (23), wherein said first (21), second (22) and third (23) surface portions are running surfaces.

2. The piston ring (1) as claimed in claim 1, wherein the most proximal part of the contacting interface (25, 25a, 25b, 25c) between the first tongue section (5) and the second tongue section (11) lies in a geometrical plane (P) which is substantially perpendicular to said axis (X), wherein
- on the first tongue section (5), the outer peripheral surface (19) extends proximally of said geometrical plane (P), and
- on the second tongue section (11), the outer peripheral surface (19) extends distally of said geometrical plane (P),

3. The piston ring (1) as claimed in claim 2, wherein,
along most of the circumference of the piston ring (1), said taper start (31) is located distally of said geometrical plane (P) and the tapering extending proximally beyond said geometrical plane (P), wherein,
on the first tongue section (5), said outer peripheral surface (19) comprises said non-tapering second surface portion (22) extending from said geometrical plane (P).

4. The piston ring (1) as claimed in claim 2 or 3, wherein, on the first tongue section (5), the outer peripheral surface (19) further comprises said tapering third surface portion (23) which tapers radially inwardly, the tapering starting from the proximal end of the non-tapering second surface portion (22) and extending proximally.

5. The piston ring (1) as claimed in claim 1 or 4, wherein the taper angle (β) of the tapering third surface portion (23) is greater than the taper angle (α) of the tapering first surface portion (21).

6. The piston ring (1) as claimed in claim 5, wherein each one of the tapering first surface portion (21) and the tapering third surface portion (23) extends to said proximal flank (15), and wherein the tapering third surface portion (23) extends in the circumerential direction from the the first tongue section (5), into the main section (3), to the tapering first surface portion (21).

7. The piston ring (1) as claimed in any one of claims 5-6, wherein, adjacent to said second tongue section (11), said outer peripheral surface (19) of the main section (3) comprises a tapering fourth surface portion (23), having the same taper angle (β) as the tapering third surface portion (23).

8. The piston ring (1) as claimed in any one of claims 2-4 or any one of claims 5-7 when dependent on claim 2, wherein, on the second tongue section (11), said outer peripheral surface (19, 22) extends non-tapered from said geometrical plane (P).

9. The piston ring as claimed in claim 1, wherein, at the main section, said outer peripheral surface comprises a barrel-shaped surface portion which bulges outward in the radial direction and which extends in the circumferential direction and is located distally of said tapering first surface portion.

10. The piston ring (1) as claimed in any one of claims 1-9, wherein the first tongue section (5) has an engagement groove formed to extend along the circumferential direction on an outer side of the main section (3) with respect to the radial direction and distal side with respect to an axis direction, and wherein the second tongue section (11) is configured to engage with said engagement groove.

## Patentansprüche

1. Kolbenring (1), der Folgendes umfasst einen Hauptabschnitt (3), der sich entlang einer Umfangsrichtung um eine geometrische Achse (X) erstreckt, einen ersten Zungenabschnitt (5), der sich von einem ersten Ende (7) des Hauptabschnitts (3) zu einem zweiten Ende (9) des Hauptabschnitts (3) erstreckt,
einen zweiten Zungenabschnitt (11), der sich von dem zweiten Ende (9) des Hauptabschnitts (3) zu dem ersten Ende (7) des Hauptabschnitts (3) erstreckt,
eine proximale Flanke (15),
eine distale Flanke (17), und
eine äußere Umfangsfläche (19), die die Flanken (15, 17) miteinander verbindet,
wobei bei Verwendung der erste Zungenabschnitt (5) dazu ausgelegt ist, den zweiten Zungenabschnitt (11) zu überlappen, um eine Kontaktgrenzfläche (25, 25a, 25b, 25c) zu bilden,
wobei an dem Hauptabschnitt (3) die äußere Umfangsfläche (19) einen sich verjüngenden ersten Oberflächenabschnitt (21) umfasst, der sich in der Umfangsrichtung erstreckt, wobei der sich verjüngende erste Oberflächenabschnitt (21) einen Verjüngungsanfang (31) aufweist, von dem sich der sich verjüngende erste Oberflächenabschnitt (21) proximal und radial nach innen verjüngt,
wobei, angrenzend an den ersten Zungenabschnitt (5) und den zweiten Zungenabschnitt (11), der Verjüngungsanfang (31) des ersten Oberflächenabschnitts (21) proximal relativ zu der Position des Verjüngungsanfangs (31) an dem Rest des Hauptabschnitts (3) positioniert ist,
**dadurch gekennzeichnet, dass**
die äußere Umfangsfläche (19) ein doppeltes Kegelprofil aufweist, das einen sich nicht verjüngenden zweiten Oberflächenabschnitt (22) und einen sich verjüngenden dritten Oberflächenabschnitt (23) umfasst, wobei der erste (21), der zweite (22) und der dritte (23) Oberflächenabschnitt Laufflächen sind.

2. Kolbenring (1) nach Anspruch 1, wobei der proximalste Teil der Kontaktgrenzfläche (25, 25a, 25b, 25c) zwischen dem ersten Zungenabschnitt (5) und dem zweiten Zungenabschnitt (11) in einer geometrischen Ebene (P) liegt, die im Wesentlichen senkrecht zu der Achse (X) ist, wobei
- am ersten Zungenabschnitt (5), sich die äußere Umfangsfläche (19) proximal zu der geometrischen Ebene (P) erstreckt, und
- am zweiten Zungenabschnitt (11), sich die äußere Umfangsfläche (19) distal zu der geometrischen Ebene (P) erstreckt.

3. Kolbenring (1) nach Anspruch 2, wobei
entlang des größten Teils des Umfangs des Kolbenrings (1), der Verjüngungsanfang (31) distal von der geometrischen Ebene (P) positioniert ist und sich die Verjüngung proximal über die geometrische Ebene (P) hinaus erstreckt, wobei
am ersten Zungenabschnitt (5), die äußere Umfangsfläche (19) den sich nicht verjüngenden zweiten Oberflächenabschnitt (22) umfasst, der sich von der geometrischen Ebene (P) erstreckt.

4. Kolbenring (1) nach Anspruch 2 oder 3, wobei, an dem ersten Zungenabschnitt (5). die äußere Umfangsfläche (19) ferner den sich verjüngenden dritten Oberflächenabschnitt (23) umfasst, der sich radial nach innen verjüngt, wobei die Verjüngung von dem proximalen Ende des sich nicht verjüngenden zweiten Oberflächenabschnitts (22) ausgeht und sich proximal erstreckt.

5. Kolbenring (1) nach Anspruch 1 oder 4, wobei der Kegelwinkel (β) des sich verjüngenden dritten Oberflächenabschnitts (23) größer als der Kegelwinkel (α) des sich verjüngenden ersten Oberflächenabschnitts (21) ist.

6. Kolbenring (1) nach Anspruch 5, wobei sich sowohl der sich verjüngende erste Oberflächenabschnitt (21) als auch der sich verjüngende dritte Oberflächenabschnitt (23) zu der proximalen Flanke (15) erstrecken, und wobei sich der sich verjüngende dritte Oberflächenabschnitt (23) in der Umfangsrichtung von dem ersten Zungenabschnitt (5) in den Hauptabschnitt (3) zu dem sich verjüngenden ersten Oberflächenabschnitt (21) erstreckt.

7. Kolbenring (1) nach einem der Ansprüche 5-6, wobei, angrenzend an den zweiten Zungenabschnitt (11), die äußere Umfangsfläche (19) des Hauptabschnitts (3) einen sich verjüngenden vierten Flächenabschnitt (23) umfasst, der den gleichen Kegelwinkel (β) wie der sich verjüngende dritte Oberflächenabschnitt (23) aufweist.

8. Kolbenring (1) nach einem der Ansprüche 2-4 oder einem der Ansprüche 5-7, wenn abhängig von Anspruch 2, wobei, am zweiten Zungenabschnitt (11), sich die äußere Umfangsfläche (19, 22) nicht verjüngend von der geometrischen Ebene (P) erstreckt.

9. Kolbenring nach Anspruch 1, wobei, am Hauptabschnitt, die äußere Umfangsfläche einen in radialer Richtung nach außen gewölbten tonnenförmigen Oberflächenabschnitt aufweist, der sich in Umfangsrichtung erstreckt und sich distal von dem sich verjüngenden ersten Oberflächenabschnitt befindet.

10. Kolbenring (1) nach einem der Ansprüche 1-9, wobei der erste Zungenabschnitt (5) eine Eingriffsnut aufweist, die ausgebildet ist, um sich entlang der Umfangsrichtung auf einer Außenseite des Hauptabschnitts (3) in Bezug auf die radiale Richtung und einer distalen Seite in Bezug auf eine axiale Richtung zu erstrecken, und wobei der zweite Zungenabschnitt (11) dazu ausgelegt ist, mit der Eingriffsnut in Eingriff zu kommen.

## Revendications

1. Segment de piston (1), comprenant
une section principale (3) s'étendant le long d'une direction circonférentielle autour d'un axe géométrique (X),
une première section de languette (5) s'étendant d'une première extrémité (7) de la section principale (3) vers une seconde extrémité (9) de la section principale (3), une seconde section de languette (11) s'étendant de la seconde extrémité (9) de la section principale (3) vers la première extrémité (7) de la section principale (3), un flanc proximal (15),
un flanc distal (17), et
une surface périphérique extérieure (19) reliant lesdits flancs (15, 17),
lors de l'utilisation, la première section de languette (5) étant conçue pour chevaucher la seconde section de languette (11) afin de former une interface de contact (25, 25a, 25b, 25c),
au niveau de la section principale (3), ladite surface périphérique extérieure (19) comprenant une première partie de surface (21) conique s'étendant dans la direction circonférentielle, ladite première partie de surface (21) conique présentant un début de conicité (31) à partir duquel ladite première partie de surface (21) conique est conique de manière proximale et radiale vers l'intérieur,
à côté de ladite première section de languette (5) et de ladite seconde section de languette (11), ledit début de conicité (31) de ladite première partie de surface (21) étant situé de manière proximale par rapport à l'emplacement dudit début de conicité (31) au niveau du reste de la section principale (3),
**caractérisé en ce que**
ladite surface périphérique extérieure (19) présentant un profil à double conicité, comprenant une deuxième partie de surface (22) non conique et une troisième partie de surface (23) conique, lesdites première (21), deuxième (22) et troisième (23) parties de surface étant des surfaces de roulement.

2. Segment de piston (1) selon la revendication 1, la partie la plus proximale de l'interface de contact (25, 25a, 25b, 25c) entre la première section de languette (5) et la seconde section de languette (11) se trouvant dans un plan géométrique (P) qui est sensiblement perpendiculaire audit axe (X),
- sur la première section de languette (5), la surface périphérique extérieure (19) s'étendant de manière proximale par rapport audit plan géométrique (P), et
- sur la seconde section de languette (11), la surface périphérique extérieure (19) s'étendant de manière distale par rapport audit plan géométrique (P).

3. Segment de piston (1) selon la revendication 2,
le long de la majeure partie de la circonférence du segment de piston (1), ledit début de conicité (31) étant situé de manière distale par rapport audit plan géométrique (P) et la conicité s'étendant de manière proximale au-delà dudit plan géométrique (P),
sur la première section de languette (5), ladite surface périphérique extérieure (19) comprenant ladite deuxième partie de surface (22) non conique s'étendant à partir dudit plan géométrique (P).

4. Segment de piston (1) selon la revendication 2 ou 3, sur la première section de languette (5), la surface périphérique extérieure (19) comprenant en outre ladite troisième partie de surface (23) conique qui est conique radialement vers l'intérieur, la conicité commençant à partir de l'extrémité proximale de la deuxième partie de surface (22) non conique et s'étendant de manière proximale.

5. Segment de piston (1) selon la revendication 1 ou 4, l'angle de conicité (β) de la troisième partie de surface (23) conique étant supérieur à l'angle de conicité (α) de la première partie de surface (21) conique.

6. Segment de piston (1) selon la revendication 5, la première partie de surface (21) conique et la troisième partie de surface (23) conique s'étendant chacune jusqu'audit flanc proximal (15), et la troisième partie de surface (23) conique s'étendant dans la direction circonférentielle à partir de la première section de languette (5), dans la section principale (3), jusqu'à la première partie de surface (21) conique.

7. Segment de piston (1) selon l'une quelconque des revendications 5 à 6, adjacente à la seconde section de languette (11), ladite surface périphérique extérieure (19) de la section principale (3) comprenant une quatrième partie de surface conique (23), présentant le même angle de conicité (β) que la troisième partie de surface (23) conique.

8. Segment de piston (1) selon l'une quelconque des revendications 2 à 4 ou l'une quelconque des revendications 5 à 7 lorsqu'elles dépendent de la revendication 2, sur la seconde section de languette (11), ladite surface périphérique extérieure (19, 22) s'étendant de manière non conique à partir dudit plan géométrique (P).

9. Segment de piston selon la revendication 1, au niveau de la section principale, ladite surface périphérique extérieure comprenant une partie de surface en forme de tonneau qui est bombée vers l'extérieur dans la direction radiale et qui s'étend dans la direction circonférentielle et est située de manière distale par rapport à ladite première partie de surface conique.

10. Segment de piston (1) selon l'une quelconque des revendications 1 à 9, la première section de languette (5) comportant une rainure de mise en prise formée pour s'étendre le long de la direction circonférentielle sur un côté extérieur de la section principale (3) par rapport à la direction radiale et le côté distal par rapport à une direction d'axe, et la seconde section de languette (11) étant conçue pour venir en prise avec ladite rainure de mise en prise.
